(19) Europäisches Patentamt / European Patent Office / Office européen des brevets

(11) **EP 2 231 735 B1**

(12) **EUROPEAN PATENT SPECIFICATION**

(45) Date of publication and mention
of the grant of the patent:
**08.06.2016 Bulletin 2016/23**

(21) Application number: **08864494.3**

(22) Date of filing: **19.12.2008**

(51) Int Cl.:
*B01J 19/00* (2006.01)    *B01F 5/06* (2006.01)
*B01J 19/24* (2006.01)    *C08G 12/38* (2006.01)
*C08G 12/32* (2006.01)    *C08G 12/12* (2006.01)

(86) International application number:
**PCT/EP2008/068120**

(87) International publication number:
**WO 2009/080798 (02.07.2009 Gazette 2009/27)**

(54) **A PROCESS FOR THE CONTINUOUS PRODUCTION OF HIGH EFFICIENT AQUEOUS AMINO FORMALDEHYDE RESIN SOLUTIONS**

VERFAHREN ZUR KONTINUIERLICHEN HERSTELLUNG HOCHEFFIZIENTER WÄSSRIGER AMINOFORMALDEHYDHARZLÖSUNGEN

PROCÉDÉ DE FABRICATION EN CONTINU DE SOLUTIONS AQUEUSES HAUTEMENT EFFICACES DE RÉSINE D'AMINOFORMALDÉHYDE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **21.12.2007 US 962482**
**23.07.2008 GB 0813470**

(43) Date of publication of application:
**29.09.2010 Bulletin 2010/39**

(73) Proprietor: **Dynea Austria GmbH**
**3500 Krems (AT)**

(72) Inventors:
• **GANN, Michael**
  **A-1190 Vienna (AT)**
• **TVETER, Marianne**
  **1481 Hagan (NO)**

(74) Representative: **Hoyng Rokh Monegier LLP**
**Rembrandt Tower, 31st Floor**
**Amstelplein 1**
**1096 HA Amsterdam (NL)**

(56) References cited:
**EP-A- 0 779 270**    **WO-A-2006/119982**
**WO-A-2007/138364**    **WO-A-2008/128908**
**WO-A1-2009/065771**    **DE-A1- 1 570 998**
**GB-A- 1 460 029**    **US-A- 3 896 087**
**US-A- 4 087 581**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

The invention relates to a process for the continuous production of an aqueous amino formaldehyde resin solution, preferably melamine formaldehyde resin (MF) or urea formaldehyde resin (UF), comprising the steps of preparing a reaction mixture of an amino compound and aqueous formaldehyde, adding a catalyst to the reaction mixture and reacting the reaction mixture in the presence of the catalyst. The invention further relates to a continuous plug flow condensation polymerisation reactor and to the use of such reactor for preparing resin solutions. The invention also relates to the use of a specific continuous mixing device for continuous mixing of catalyst into a reaction mixture. The invention further also relates to the amino formaldehyde resin solution and to the resin obtainable by the process, to the use thereof for the manufacture of adhesive compositions and to adhesive compositions comprising the amino formaldehyde resin.

DE2202202 describes a process for the continuous production of reactive urea-formaldehyde (UF) resins by condensation of urea (U) and formaldehyde (F) at a U/F ratio from 1:1.5 - 1: 2.5 at temperatures above 100 °C comprising dissolving U in F-solution (37% in water) then injecting the solution for the condensation reactor in a first loop reactor at 100 - 140°C at 1 - 4 bar with a dosing-to- total circulation weight ratio between 1:10 and 1:50 and transferring the product after an average residence time of 10 - 60 minutes to a second loop reactor where a 50 - 80% aqueous urea solution and caustic is added to bring the U/F ratio from 1:1.5 to 1: 1.9 and pH to 7. The second loop reactor is operated at 30 - 90 °C and at 40 - 600 Torr to evaporate water and concentrate the reaction mixture to 50 - 70 wt%. The reaction heat in the first step is used to heat the reaction mixture to evaporate the water in the second step.

A disadvantage of this process is that there is insufficient control of the reaction conditions and the properties of the end product are too variable. Due to the undefined reaction time, local temperature and concentration differences, there is an undefined alteration of reaction species resulting in a broad molecular weight distribution and a risk of too high degree of polymerisation and even gel-formation. Further, the process requires a dilute solution and consequently a separate step for concentrating the reaction mixture. The concentration is a highly energy consuming step and is contrary to the ambitions of energy saving in industrial processes. The object of the invention is to provide a process that does not have at least one of the mentioned disadvantages of the prior art.

US 4458062 describes a continuously produced melt reacted Melamine-Formaldehyde Resin. Solid Melamine and Formaldehyde are continuously processed in the melt using a screw extruder, in absence of water or other solvents. The process is desired for coating applications and is only suitable for production of powder resins. The use of molten resins is cost and energy consuming and is very hard to get a homogenous mixing, the equipment is also very expensive.

WO 2006 119982 A1 describes a melamine-formaldehyde resin solution has a formaldehyde/melamine ratio smaller than or equal to 1.5, at which it possesses a water compatibility ranging from 0.15 to 4.0 at 20 DEG C, and a stability of at least 5 hours at a F/M ratio of 1.0, a stability of at least 6 hours at a F/M ratio of 1.1, a stability of at least 13 hours at a F/M ratio of 1.2, a stability of at least 24 hours at a F/M ratio of 1.3, a stability of at least 50 hours at a F/M ratio of 1.4, and a stability of at least 200 hours at a F/M ratio of 1.5, the stability of the resin solution being linearly dependent, within the range boundaries 1.0<F/M<1.1, 1.1<F/M<1.2, 1.2<F/M<1.3, 1.3<F/M<1.4, 1.4<F/M<1.5, upon the stabilities of the corresponding F/M range boundaries. While having a low formaldehyde content, the melamine-formaldehyde resin solution has adequate storage stability and water compatibility, and can be easily produced without the admixture of modifiers.

GB 1 460 029 A describes a Continuous manufacture of urea, melamine or phenolic resins PERSTORP AB 5 Dec 1973 [21 Dec, 1972 8 Nov 1973] 56298/73 Heading C3R [Also in Division B1] A process for the production of phenolic resin, urea resin or melamine resin is carried out in an apparatus comprising compartments defined by a plurality of baffles 14, 15, 21 23, 24 &c. arranged to form an "under and over" sinuous path for liquid reaction mixture, central alternate baffles, e.g. 23 and 24 possibly extending to the top of the reactor, reaction components being introduced into one end, e.g. compartment 13. Air can be introduced through valves 29 and 30 and gas drawn off by vacuum through conduit 8. Initial and final compartments may have heating/cooling jackets or coils, and at least one compartment where reaction components are charged may have one or more stirrers. The baffles may have. toothed edges. A lignin or colophony solution may be added as a modifying agent. In specific examples, phenol and formalin are reacted in the presence of aqueous NaOH using a phenol/ formaldehyde mol. ratio of 1 : 1À76; 1 ; 1À44 ; 1: 1À57 and 1 : 1À45; urea formaldehyde resin with a urea/ formaldehyde mol. ratio of 1 : 1À41 is formed from a urea-formaldehyde concentrate and urea using formic acid for pH adjustment and adding aqueous NaOH/urea solution towards the end of the flow path; and melamine formaldehyde resin is prepared from melamine and formalin in mol. ratio of 1 : 1À85 and 1 : 1À83.

WO 2008 128908 A describes a process for the preparation of a condensation resin at elevated temperature and pressure, wherein the monomers of the condensation resinare fed continuously to a tubular reactor provided with static mixer elements.

WO 2009 065771 A1 describes a process for the preparation of a condensation resin at elevated temperature and pressure, wherein the process is performed continuously in one or more tubular reactor(s) provided with static mixer elements. The feed of the tubular reactor(s) stems from a master batch preparation, during which preparation essentially no reaction takes place between the monomeric precursors.

According to the invention there is provided a process for the continuous production of an aqueous amino formaldehyde, preferably melamine or urea formaldehyde, resin solution comprising the steps of a) preparing a reaction mixture of an amino compound and an aqueous formaldehyde, b) adding a catalyst to the reaction mixture and c) condensation reacting the reaction mixture in the presence of the catalyst characterised in that in step a) the amino compound and the formaldehyde are added as a concentrated aqueous solution or as a solid to a total solid content in the reaction mixture of 40 - 85 wt% (dry weight relative to the total weight of the reaction mixture), whereinin step c) the condensation reaction takes place in a continuous plug flow of the reaction mixture either in a static mixer comprising a tube containing in-line mixing elements, or in a tube reactor with turbulent plug flow, and wherein
in step b) the catalyst is continuously added and finely dispersed into the reaction mixture through one or more addition points,
in optional step d) adding an amount of amino compound after condensation,
in optional step e) removing water to reach a higher solid content, and
wherein the continuous plug flow in step c) is characterized by a Bodenstein number of at least 10.

It was found that the process according to the invention can produce a highly concentrated amino-formaldehyde solution in a continuous process without the need on one hand to use a dilute solution to avoid the risk of a too high degree of condensation and gelation and, on the other hand without the need to use expensive equipment for processing highly viscous melts, like extruders. Although it may be desired for certain applications to use an additional step e) for removing water to reach a higher solid content, the process according to the invention can provide a highly concentrated solution, and is preferably performed, without concentration step after the condensation step. Due to the well defined reaction time a well defined molecular weight distribution is obtained. This can not only be achieved for amino formaldehyde resin solutions of the fusible type, but also without further precautions for very reactive type of amino formaldehyde resin solutions having molar ratio F/A above 2.

With the term "continuous production process" is implied that at least the condensation reaction step is a continuous process step. The reaction mixture may be prepared separately in a batch and then added to the continuous condensation reaction step or, more preferably, the reaction mixture is prepared in a continuous process, preferably in a prepended continuous plug reactor tube, and continuously added to the condensation reaction step.

Suitable amino compounds comprise 2 or more amino groups, preferably urea, melamine, dicyandiamide, alkyl/aryl amine, polyamine, proteins. Optionally, minor amounts in the range of 1 - 20, preferably 1 - 15 and more preferably 1 - 10 wt% (relative to total solid content) of amino compounds comprising only one amino group may be present, for example paratoluenesulfonic amide may be present in MF resins. The preferred amino compound is urea. In the preparation of a reaction mixture (step a) the amino compound is added as a concentrated aqueous solution or as a solid. A concentrated aqueous solution of the amino compound preferably comprises at least 75%, more preferably at least 80%, even more preferably at least 85% or even at least 90% and most preferably at least 95% of its saturation value. The saturation value is the weight percentage of amino compound that can maximally be dissolved in water at the operating temperature. For example, the saturation value for urea in water at 80 °C is 80 wt% (weight urea relative to total solution weight), so the concentrated solution preferably comprises at least 60 wt% of urea. Most preferably the urea is added as a solid, in particular in combination with a separate methylolation step as described hereafter.

The resin may be urea formaldehyde (UF) or melamine formaldehyde (MF) resin, but also UF or MF resin modified with a minor amount of additional component such as urea, melamine, hydroxyfunctional aromatic compound, preferably phenol and/or natural compounds, for example phenol-urea-formaldehyde (pUF), melamine-urea formaldehyde (mUF), natural compound urea formaldehyde (ncUF) or combinations and MF analogues thereof. Natural compounds that can be used in UF or MF can be compounds having functional groups reactive with formaldehyde, for example amine containing compounds like amino-acids. Where reference is made to UF/MF resins, this is intended to include also UF/MF resins that are modified with minor amounts of the additional component. A minor amount in this context is meant to be between 0.1 and 15wt%, preferably 0.1 and 10 wt%, and most preferably between 0.1 and 5 wt% (relative to total weight of the amino formaldehyde resin)

The formaldehyde is added as a concentrated formaldehyde aqueous solution or as a solid. The term "concentrated" implies having a formaldehyde concentration of at least 40, preferably at least 45, more preferably at least 50 and most preferably at least 55 wt% in water (wt% relative to the total weight of the formaldehyde solution). In an embodiment of the invention paraformaldehyde can be used. By adding highly concentrated or solid amino compound and concentrated formaldehyde aqueous solution, a reaction mixture is obtained having a very high concentration of amino formaldehyde reactants. The total amount of amino formaldehyde reactants in the reaction mixture is between 40 and 75 wt%, preferably between 45 and 70 wt%, more preferably between 50 and 65 wt% (dry solids weight relative to the total weight of the reaction mixture). At the start of the condensation reaction step, the reaction mixture may be heterogeneous, i.e. comprising undissolved amino compounds, but most preferably is a homogeneous solution of the reactants and/or pre-condensated reaction products thereof.

In principle, the relative amount of formaldehyde and amino compounds may vary between broad ranges. The molar ratio formaldehyde to amino compound F/A, defined as the number of formaldehyde groups F divided by half of the number of amino-groups $NH_2$ in the amino compound $(F/((NH_2)_2))$, can range between 0.5 and 4.5. The process can be used where the reaction conditions are not so critical, for example for preparing amino formaldehyde solutions of the fusible type having an F/A molar ratio below 2, for example between 0.5 and 1.5. However, the process according to the invention is designed for and is preferably used in more critical conditions. The advantages of the present invention can be achieved without further precautions for highly reactive UF resins wherein, for UF the molar ratio preferably is between 1.5 and 3.7 and most preferably between 1.6 and 3.2 and for MF the molar ratio preferably is between 0.6 and 4.3, more preferably between 0.6 and 2.7 and most preferably between 0.8 and 2.4.

The catalyst in the condensation reaction can be a basic or an acid catalyst for all amino formaldehyde resins. However, for UF resins an acid catalyst is preferred and for melamine formaldehyde resin a basic catalyst is preferred. It is essential for the control of the reaction that in step b) the catalyst is continuously added and finely dispersed into the reaction mixture through one or more addition points. It is highly preferred to have multiple addition points to achieve a quick homogeneous dispersion of the catalyst. However, although less preferred, acceptable results can also be obtained using a single addition point in combination with appropriate mixing means, for example a mechanical mixer or, more preferably a prepended static mixing device, optionally in combination with a lower temperature. The catalyst is preferably added as an aqueous solution. The concentration of the catalyst is preferably chosen high to not unnecessarily add water, but on the other hand not too high to avoid too high local catalyst concentration and too high concentration fluctuations in the reaction mixture. Too high local concentration may cause a runaway reaction and gelation. In case of an acid or base catalyst, good results can be obtained using a concentration in the range between 1 and 20 wt%, preferably between 2 and 7.5 wt% and more preferably between 2.5 and 5 wt%. Preferred ways of adding the catalyst are described below.

A highly concentrated urea formaldehyde (UF) reaction mixture is preferably reacted in the condensation reaction step in the presence of an acid catalyst, preferably a protic acid, preferably a strong acid such as ammonium sulphate or formic acid or, most preferably, sulphuric acid. A highly concentrated MF reaction mixture is preferably reacted in a condensation reaction step in the presence of a basic catalyst, for example sodium carbonate solution, more preferably amine or hydroxylamine, most preferably sodium hydroxide.

The condensation reaction step c) takes place in a continuous plug flow of the reaction mixture. The specified method of catalyst addition creates a very homogeneous reaction mixture which, under the continuous plug flow conditions with a well defined residence time, low backflow coefficient and narrow residence time distribution, can be reacted in a continuous process to a highly concentrated resin solution without substantial risk of a runaway reaction. The continuous plug flow reaction conditions in the condensation step can be characterized by a Bodenstein number. The Bodenstein number is a dimensionless characteristic number describing the relationship between the moles convectively supplied to the moles supplied by dispersion. Thus the Bodenstein number characterizes the back mixing within a system according to the formula: $Bo = v * L / Dax$ wherein v = flow velocity [m s-1], L = length of the reactor [m] and $D_{ax}$ = axial dispersion coefficient. [$m^2$ $s^{-1}$]. The length of the reactor is defined as the length between the start and the stop of the condensation reaction, typically between point of the addition of the catalyst and of the addition of the catalyst stopper. The Bodenstein number in the process according to the invention is at least 10, typically between 20 and 50. Preferably, the number is as high as possible, preferably at least 15, more preferably at least 20, even more preferably at least 30, more preferably at least 50. To achieve such high Bodenstein numbers, in the process the reaction mixture is continuously mixed during the condensation reaction by in-line mixing elements in laminar or quasi-laminar plug flow. Alternatively, the reaction mixture is mixed by turbulent plug flow. It is known in the art how to determine the Bo number for a specified process. This involves calculating theoretical velocity distribution curves for different Bo numbers for a given reactor, then measuring the velocity profiles, normalizing and fitting of the determined profiles on the calculated theoretical prophiles to find the Bodenstein number.

To determine the velocity prophiles it is necessary to know about the retention time spectrum E(t) or the step response F(t) (retention time sum curve), which are defined as: E(t) is the part of the flow rate, which leaves the reactor with a retention time between t and t+dt and F(t) is the entire flow rate fraction, which leaves the reactor with a retention time between 0 and t. For the experimental determination of the retention time a characteristic of the flowing medium is changed directly before the entrance into the reactor and is recorded at the outlet of the reactor as function of the time pursued. For example at a present time (t = 0) a certain tracer amount (e.g. sodium chloride solution, eventually in ammonia to reduce the density difference to water) is added to the inlet V of the reactor (as a sharp step function or as a Dirac pulse) and the concentration c(t) is measured at the exit of the reactor. The used indicator must be inert in the process and has to be analysable by a certain property (e.g. electrical conductivity) to be distinguished from the reaction mixture. At the outlet of the reactor the electrical conductivity of the liquid is measured in a commercial conductivity-cell. The result is noted by an attached data logger. The indicator concentration is zero within the reactor before adding the tracer, the added quantity is $n_0 = c_0 * VR$ (with $V_R$ = reactor volume). Regarding the tracer concentration $dn_0$ which is leaving the reactor with retention time $t + dt$ arises in the expression (i) $dn_0 = n_0 * E(t)dt$. (E(t) = retention time spectrum). With the temporal concentration c(t) in the reactor outlet, the indicator quantity is depicted as (ii) $dn_0 = V * c(t)dt$ (V = Volume throughput). Finally the term is expressed by combination of the equations (i) and (ii) to

$$E(t) = \frac{V}{n_0} c(t) \text{ and reformed to } n_0 = V \int_0^t c(t)dt .$$

For the measurement of the step response F(t) the concentration of the indicator in the inlet is increased starting from a time t = 0 suddenly from 0 to a certain value $c_0$ and kept constant to this value. The concentration c(t) is measured in the exit. The step response is depicted as $F(t) = c(t)/C_0$.

This procedure refers to a step function and the reception of a step response in the sense of control engineering.

In a preferred embodiment of the invention, a reaction mixture is prepared (in step a) by reacting the formaldehyde with the amino compound in the presence of a base catalyst to produce a solution of methylolated amino compound (methylolation step). The advantage thereof is that the obtained reaction mixture, a homogeneous solution of methylolated amino compound, provides a better homogeneity and control of the reaction conditions during the condensation reaction step. The methylolation step is preferably done at a temperature chosen above a sedimentation temperature where sedimentation of the reactants may occur, at least 60, more preferably at least 70 and most preferably at least 80°C. Preferably the temperature is chosen below the condensation reaction temperature to avoid excessive polymerization, preferably below 120°C, more preferably below 110°C and most preferably below 100°C. The pH in the methylolation step in case of UF is preferably adjusted between 4.0 and 10.0, more preferably between 5.5 and 8.5 and in case of MF preferably between 7.0 and 11.0 and more preferably between 8.5 and 10.5.

The viscosity of the reaction mixture at the start of the condensation reaction step is between 1 and 150 mPas, preferably between 1 - 100 mPas. In this description, the term viscosity implies viscosity determined according to DIN EN ISO 3219:10/94 at room temperature (23.0 +/- 0.2°C) and at a shear rate of 200/s. The viscosity of a sample was measured according to DIN EN ISO 3219:10/94 with a rotary viscosimeter (PAAR PHYSICA MCR 51). The system contains two static symmetric coaxial plates between which a bubble free liquid sample is applied of which viscosity has to be measured. One of the plates rotates with a defined angle velocity (rotor), while the other is static (stator). One plate is connected to a system which is able to measure the rotary moment at the point of overcoming the friction resistance of the plates with the liquid. The shear rate is 200/s.

The condensation reaction rate depends strongly on the pH and to a lesser extent on the reaction temperature. In view of obtaining a high reaction rate and production capacity (at lower pH) without a too high risk of a run-away reaction, the pH in the condensation reaction step is preferably adjusted, in case of UF, between 3 and 7, preferably between 3 and 6 and most preferably between 3 and 5 and, in case of MF, between 7 and 11. The temperature during the condensation reaction is preferably between 90 and 180°C, more preferably between 100 and 170°C. In the process according to the invention the pressure can rise above atmospheric pressures and the temperatures can be well above the boiling temperature of water, i.e. above 100°C. The pressure during the condensation step is preferably above atmospheric pressure because the formaldehyde is more reactive at high temperature and high pressure conditions. In view of obtaining a higher reactivity the pressure is preferably at least 1.1, more preferably at least 1.5, even more preferably at least 2, even more preferably at least 3 and most preferably at least 5 bar. The pressure is typically in a range between 1 and 20 bars, more preferably between 1 and 15 bars and most preferably between 1 and 10 bars. A further advantage of the high temperature during the condensation reaction is that the viscosity of the product stream is low. At low viscosity the catalyst stopper can be mixed in more quickly and more homogeneously, so a sharper cut off of the condensation reaction can be obtained resulting in better product homogeneity, a smaller molecular weight distribution and lower risk of gelation.

The residence time in the condensation reaction step is preferably chosen between 0.5 and 120 minutes. Because for UF a higher reaction rate can be chosen than for MF, the residence time for UF can be shorter, i.e. between 0.5 and 60 minutes. In the process of the invention very low residence times can be achieved, preferably below 30, more preferably below 20 and even more preferably below 10 minutes. For example, for urea formaldehyde at a pH of about 4.6 and a temperature of about 105 °C the residence time is about 20 min. At a pH of about 3.0 a residence time can be achieved of only 1 minute or less. The reaction conditions for preparing MUF resin solutions are chosen between the described conditions for UF and MF resins respectively proportionally depending on the relative amounts of U and F in the MUF resin.

The above-described methylolation step and the subsequent condensation reaction step are preferably combined and both performed consecutively in continuous plug flow conditions, preferably in the same tube. In this embodiment the pressure in the methylolation step and the condensation step is preferably the same. The methylolation step is distinguished from the condensation reaction step by a change (lowering) of the pH and preferably also by a raise in temperature. The change in pH and temperature do not necessarily need to coincide; the temperature can be allowed to rise after lowering the pH.

Considering that the condensation reaction is exothermal the generated heat must be transported out of reaction mixture. This is preferably done by cooling the reactor, for example using a cooling liquid circulating in a double wall around the reactor tube. In view of avoiding run-away reactions and an undefined broad molecular weight distribution, it is most important that the heat transfer is efficient and that the temperature is very homogeneous throughout the reactor cross-section. It was found that the static mixing elements provide such efficient mixing and temperature homogeneity during the condensation reaction. It is most easy but not necessary to choose the set- temperature during the condensation reaction to be substantially isothermal because this provides an easier control of the reaction temperature conditions. Optionally, the condensation reaction step comprises two or more, preferably 2 to 10, preferably 2 to 6, more preferably 2 to 4 consecutive substantially isothermal substeps at different set temperatures.

In the process according to the invention it is preferred that the reaction rate is set and/or controlled by controlling the pH with the amount of catalyst added. For a chosen residence time and temperature conditions in the reactor, the reaction rate is adjusted by the amount of added catalyst such that at the end of the condensation reaction step, preferably at the end of the condensation reactor, the desired viscosity of the formaldehyde resin solution is obtained. The desired viscosity depends on the envisaged application. The viscosity for UF resins of different applications generally is between 50 and 4000 mPas. For many UF resin solution applications this typically is between 100 and 3000 mPas (determined as described above at room temperature using 200/s) preferably between 150 and 800 mPas. For application in paper impregnation the viscosity preferably is low and for particle boards and adhesive applications the viscosity generally is higher. For quick resins for paper applications, the viscosity of the obtained resin solution can be for example between 10 and 500 mPas. For melamine formaldehyde resin solution it is required in view of the envisaged end-use that the water tolerance (i.e. the relative amount of water the solution contains without becoming hazy) of the formaldehyde resin solution obtained at the end of the condensation reaction step reaches 50 to 500%.

At the end of the condensation reaction step the condensation reaction is stopped by adding and mixing a catalyst stopper into the reaction mixture and/or by cooling of the reaction mixture. Where the condensation reaction is acid catalysed the catalyst stopper is a base, which is preferably added in an amount to increase the pH to between 6 and 11. In case of UF resin, a base is preferably added to reach a pH between 7 and 10. The reaction mixture is cooled before, during and/or after said base addition. In the process according to the invention, the reaction mixture directly obtained after the condensation reaction step has a very high solids content of 40 to 85 wt.%, preferably 45 to 75 wt.%, more preferably 50 to 75 wt.% at most preferably 55 to 75 wt.% without an additional concentration step.

The amino formaldehyde resin has been produced with an excess of formaldehyde to have a high reactivity. In view of the envisaged end use as adhesive composition, it is preferred that (in step d) additional amino compound is added to the amino formaldehyde resin solution obtained after the condensation reaction step; i.e. after having stopped the condensation reaction, in an amount to reach a molar ratio of formaldehyde to amino compound F/A between a 0.5 and 2.0, preferably between 0.7 and 1.5, most preferably about 0.9 and 1.1 and a total dry solid content preferably between 45 and 85 wt%. The post-addition of amino-compound has the additional advantage of further increasing the solids content, to bind residual free formaldehyde, to dilute the long polymers and partially crack the long chains to short chains necessary for the crosslinking on drying and reducing of the viscosity of the solution. The amount of additional amino component can range between 1 and 50 weight percent, but preferably is between 2 and 205, more preferably between 3 and 25 weight percent of amino compound is added. It is preferred that the additional amino compound is present in smaller amount relative to the urea or melamine in the UF or MF resin compound, preferably the amount of additional compound is less than 50 wt% (wt% relative to the total weight of the urea/melamine and the additional compound), more preferably less than 25, even more preferably less than 15 and most preferably between 1 and 10%.

The amino compound added after the condensation reaction (step d) does not necessarily have to be the same amino compound used in amino formaldehyde resin and is chosen in view of the desired properties of the envisaged user application. For example, the amino formaldehyde resin can be urea formaldehyde and the additional amino compound can be melamine or vice versa. The amino formaldehyde resin solution obtained after the condensation reaction step (c) is preferably reacted with one or more portions of amino compound, preferably urea or urea and melamine, in the presence of a base catalyst, preferably at a temperature below the temperature of the condensation reaction step and at atmospheric pressure conditions. Because at a temperature below 100°C and at atmospheric pressure the reactivity is relatively low, urea is the most preferred post addition compound in view of its highest reactivity. Melamine can also be used, but is less reactive and less preferred. Apart from the additional amino compounds, hydroxyfunctional aromatic compounds, preferably phenol can be added and preferably reacted at temperatures above 100°C to achieve full conversion of the hydroxyfunctional aromatic compound, in reaction with the resin solution.

In step d) the amino compound can be added as a highly concentrated solution in water. However, it is preferred to add water as little as possible. The additional amino compound, preferably urea is preferably added as plastified composition to avoid too much addition of water. The plastification of the amino compound urea can take place by kneading the compound at elevated temperature where the compound is plastic, preferably close to the melting point, preferably in a single- or double screw extruder or a planet-extruder. The advantage thereof is that the decomposition of the compound is prevented. Optionally, a small amount of water is added to prevent too high temperatures and decomposition. The addition is preferably done continuously from the fore mentioned plastification extruder, but may also be done by continuous addition from a batch.

The amino formaldehyde resin solution can further be extended by addition, preferably after step (d), of 1 to 15, preferably 1 - 12, more preferably 1 - 10 wt% (relative to the total weight of the resin solution) of extension components, preferably chosen from the group of rape seed flour, proteins, wheat flour. This is mostly done to reduce the cost of the resin solution.

In a plug flow reaction, the reaction mixture is pumped through the housing, preferably a tube, wherein the chemical reaction proceeds as the reaction mixture travels through the tube. The plug flow essentially differs from laminar flow in that the parabolic velocity profile is broken down by radial mixing. This is achieved by using in line mixing elements or by having turbulent flow conditions. In a preferred embodiment of the process according to the invention, the condensation reaction step takes place in a static mixer, comprising a housing, preferably a tube, containing in-line mixing elements. The static mixer is preferably used in laminar or quasi-laminar flow conditions at Reynolds number below 500, and is even more preferred at Reynolds number below 300 or below 100. In a preferred embodiment the plug flow conditions are characterized by a Reynolds number less than 30, preferably less than 25 and more preferably less than 20. In an alternative embodiment of the invention, plug flow conditions and intense mixing can also be achieved without mixing elements if the condensation reaction takes place in a tube reactor with turbulent plug flow, most preferably at a Reynolds number above 2300. Good results may be achieved in the process according to the invention Reynolds number above 1500, more preferably above 1700, even more preferably above 2000. Preferably, the Bodenstein number is at least 10, typically between 20 and 50. Preferably, the number is as high as possible, preferably at least 15, more preferably at least 20, even more preferably at least 30, more preferably at least 50.

The in-line mixing element can in principle be any static object that changes the flow direction of part of the volume of the reaction mixture flowing through the tube and causes mixing. The in-line mixing elements can be glass beads, metal balls, spikes or baffles statically positioned inside the tube. The static mixer device preferably comprises in the tube (in-line) a number of consecutive static mixing elements comprising one or more baffles at an angle relative to the flow direction forcing changes in the flow direction. The baffles in each subsequent mixer element have an orientation different from the orientation in the previous and/or following mixer element. Preferably, the orientation of the baffles in each consecutive mixer element is offset by 90°. The baffles can be alternating spiral parts (twisted blades) with each spiral part offset by 90°. More preferably, the mixing elements are X-mixing elements comprising two sets of two or more, preferably to 2 - 10, baffles wherein the baffles of each set are positioned essentially plan-parallel to each other, but at an angle, preferably 90°, with the baffles of the other set and wherein each baffle of one set is positioned alternately next to a baffle of the other set in a crosswise arrangement to divide the flowing reaction mixture into separate streams flowing in different directions within the mixer element, and wherein the baffles in each subsequent mixer element are offset at an angle, preferably 90°, relative to the previous mixer element. Preferably the X-mixing elements comprise 4 - 10 sets of baffles. Suitable static mixers are provided for example by Fluitec. The static mixer preferably has a double wall for temperature control with a fluid.

Normally, static mixers are used for mixing or blending and optionally reacting two or more fluid streams. In the process according to the invention the condensation reaction does not involve mixing of two or more fluid streams. Instead, in the present invention the static mixers are most preferably used for creating homogeneous reaction conditions throughout the reaction mixture to maintain a good heat transition to the tube walls and achieve homogenous temperature distribution to avoid local temperature rises due to the exothermic reaction. The mixing elements maintain a high shear force avoiding wall effects whilst maintaining a plug flow at laminar flow conditions. The static mixer reactor maintains a running (condensation) reaction of the amino compounds and formaldehyde, wherein the reactants and reaction products are intensely mixed to maintain a well defined molecular distribution and a low risk of a runaway reaction and gelation. Another advantages that the static mixer reactor does not have moving parts (e.g. propeller mixer etc.), which makes the process more reliable.

To obtain a homogeneous temperature distribution and mixing it is preferred that the reaction mixture is continuously mixed from the beginning to the end of the condensation reaction, that is from the moment the catalyst is added to the moment that a base is added to neutralize the catalyst or to the moment that the mixture is cooled to stop the condensation reaction Therefore, it is preferred that the static mixer comprises in-line mixing elements substantially along its full length. In view of avoiding wall effects and obtaining sufficiently homogeneous temperature and molecular distribution, it is preferred that the tube of the static mixer has an inner diameter at most 70 cm, preferably 30 cm, more preferably 7 cm, even more preferably at most 5 cm, because of the preferred small diameter, in large number of mixing elements are needed; preferably at least 22, more preferably at least 44, more preferably at least 66 mixing elements. The ratio between length and diameter of the reactor should be at least 10:1, preferably at least 20:1 and most preferably at least 50:1.

As described above the condensation rate is highly dependent on the pH and it is essential that (in step b) a catalyst is continuously added to the flowing reaction mixture and finely dispersed into the reaction mixture through one or more addition points. The catalyst can be added in different ways, for example by one or more, preferably multiple separate supplies (for example tubes or hoses) each connected to the tube of the static mixer. Preferably, the catalyst is continuously added in a prepended continuous mixing device comprising a tube with mixing elements wherein the tube has one or more, preferably multiple addition points for finely dispersing the catalyst into the reaction mixture. The static mixing device of step b) more preferably is double walled comprising an inner tube and an outer casing wherein the inner tube comprises at least 4, preferably at least 6 static mixing elements which tube is perforated, preferably only at the position of the first or first two mixing elements, and wherein the outer casing provides a closed space over at least the perforated part of the inner tube and has an inlet opening for adding catalyst in said closed space to finely disperse droplets of the catalyst through the perforations into the inner tube. Alternatively the static mixing device can be one or more perforated tubes, which can be inserted into one or several static mixing elements, preferably into the center.

For a good operation of the mixing device, the number of perforations is preferably high, the diameter of the perforations is small and the perforations preferably are arranged substantially equidistant on the surface of the tube. Preferably the tube comprises 4 - 40 perforations having a diameter between 0.1 and 1 mm, preferably between 0.1 and 0.5 mm. The number of perforations and the diameter thereof are chosen in view of the amount of catalyst that needs to be added. Almost ideal mixing is achieved when the reaction mixture in the static mixer passes 8 mixing elements. However, acceptable mixing may also be achieved with 4 or 6 mixing elements. The invention also relates more generally to the use of the above described static mixing device in a process for the continuous preparation of a resin solution, preferably a formaldehyde resin solution, most preferably a UF or MF resin solution described herein, for continuously dispersing a catalyst through said addition point(s) into a reaction mixture flowing through the tube.

The invention also relates to a continuous plug flow condensation reactor and to the use thereof in a process for the preparation of amino formaldehyde resins, comprising a static mixer comprising a thermostated, preferably double walled, tube having an inner diameter of between 2 and 70 cm, preferably between 2 and 30 cm, more preferably between 2 and 5 cm and comprising at least 20, preferably at least 40, more preferably at least 60 and most preferably at least 80 in-line mixing elements providing a high mixing efficiency, preferably characterised by a Bodenstein number of at least 20, preferably at least 40, more preferably at least 60 and most preferably at least 80.

More in particular, the invention relates to a continuous plug flow reactor for the continuous production of a resin solution, comprising, a) an optional mixing section for preparing a reaction mixture, b) a continuous mixing device as described above for mixing catalyst into the reaction mixture, c) a continuous plug flow condensation reactor section as described above, d) an optional catalyst stopper section comprising a thermostated static mixer comprising a catalyst stopper inlet and static mixing elements for mixing the catalyst stopper into the reaction mixture and e) an optional control circuit for automatic control of the reaction conditions, said control circuit comprising a product quality measurement unit after the continuous plug flow condensation reactor, a control unit for determining, on the basis of the product quality measurement, the optimal reaction condition parameters for the continuous mixing device and/or continuous plug flow condensation reactor in view of obtaining pre-determined desired product properties and means for automatic adjustment of said reaction condition parameters. The above-mentioned components are connected to operate as one continuous tube reactor. The product obtained in a process and reactor according to the invention has a better reproducibility because the product can be produced under highly stable and reproducible conditions maintained in the continuous process in the tube reactor.

The invention further relates to an amino formaldehyde resin solution obtainable by the process according to the invention as described above preferably having a viscosity between 50 - 4000 mPas (determined at room temperature) and a solids content between 40 - 85 wt.%.

As described above, after the condensation reaction additional amino compound is preferably added and reacted to the obtained amino formaldehyde resin solution as described above. The invention therefore also relates to the AF solution obtainable by reacting the product obtained from the condensation reaction with additional amino compound wherein the molar ratio F/A of the obtained solution is between 0.5 and 4.3, preferably between 0.7 and 2.7. For a UF resin solution the molar ratio after addition of additional amino compound preferably is between 0.7 and 2.0 and most preferably between 0.9 and 1.1. For a MF resin solution the molar ratio preferably is between 0.6 and 4.3, more preferably between 0.6 and 2.7 and most preferably between 0.8 and 2.4.

The invention also relates to the resin isolated from the resin solution. The amino-formaldehyde, preferably urea-formaldehyde, or melamine-formaldehyde resin solution which is directly obtained by the process according to the invention can be used without removal of water, i.e. additional solution concentration step, for the manufacture of an adhesive composition. The invention also relates to an adhesive composition comprising the amino-formaldehyde resin and optional additional hardeners, fillers, scavengers and other optional additives.

The obtained end-product, i.e. the product obtained directly condensation or, as the case may be, after post addition of additional amino compound, are characterised in that they have a very small polydispersity

$$Q = \frac{Mw}{Mn}$$ compared to conventional batch produced resin solutions (wherein Mw is the weight average molecular weight, and Mn is the number average molecular weight as determined by gel permeation chromatography (GPC)). In a UF resin, Q for that portion of the resin in the Mw range 900 and 3000 gr/mole is below 1.15, more preferably below 1.12, even more preferably below 1.10 and most preferably even below 1.08. For the portion of the resin in the Mw range 3000 and 4000, Q-values of below 1.20, preferably below 1.15 or even below 1.10 are achievable. For the portion of the resin having a Mw above 4000, preferably in the range 4000 to 10000, the Q may be somewhat higher, but still below 1.4, preferably below 1.35, more preferably below 1.30 and even more preferably below 1.25.

The amino formaldehyde resin solution according to the invention is advantageously used as binder resin in particle boards, for example wood fiber boards or as paper impregnation resin. The invention therefore also relates to particle board comprising particles and a binder resin, or resin impregnated paper wherein the binder resin is the UF or MF resin according to the invention. The resin has distinct advantages in the manufacture and end-quality of the particle boards because of the molecular characteristics and high reactivity of the resin.

Particle boards made with the AF resin solution according to the invention have, at comparable composition and production conditions, for the different particle board types from P1 to P7 as described in EN312, a transverse tensile strength (measured by EN 319) which, compared to boards made by traditional batch resins is at least 5%, preferably at least 10%, more preferably at least 15% and most preferably at least 20% higher. The transverse tensile strength is at least 20%, more preferably at least 30% even more preferably at least 40% and most preferably at least 50% higher than the requirements listed for particle boards P1 to P7 as described in EN312. The binding quality of the resin is characterised in that the transverse tensile strength of a wood particle board according to the invention, having a thickness between 16 and 25 mm (preferably about 16mm) and a resin load in the range between 8-10 wt% (resin weight relative to total board weight), is at least 0.35 N/m$^2$, pref-

erably at least 0.40 N/mm$^2$, more preferably 0.44 N/mm$^2$. and most preferably at least 0.52 N/mm$^2$.

A further advantage of the present invention is that the particle board made with the amino formaldehyde resin solution according to the invention have, at comparable composition and production conditions, lower formaldehyde emission (measured by EN 120) compared to traditional batch prepared particle boards. Formaldehyde Emissions typically are below 6, preferably below 5.5, more preferably below 5, even more preferably below 4.5 and most preferably below 4 mg / 100 g.

The particle board product comprising UF or MF resin according to the invention cures faster compared to boards made by traditional batch resins. The production time of a particle board according to the invention (expressed in sec/mm; time required to fully cure per mm thickness of the board) is preferably at least 5% lower, more preferably at least 10%, even more preferably at least 20% and most preferably at least 30% lower (based on production rate of 8 sec/mm and average board pressing temperature of 220°C in a particle board press). A shorter press time also implies less energy consumption and higher production capacity. The reactivity can be expressed in the hot gelation time, which preferably is below 36 seconds, more preferably below 34 seconds, even more preferably 32 seconds or below, and most preferably 30 seconds or below. The hot gel test procedure: 25.0 g glue and 2.5 ml ammonium chloride (150 g NH4Cl, 850 g deionate) solution are mixed with a glass rod in a beaker. 2.0 ml of this mixture are filled in a glass tube (16 x 160 x 0.5mm). The tube with the mixture is placed in a boiling water bath. At the same time the time measurement starts. With a glass rod (d = 4,8 - 5,2 mm) the mixture is stirred continuously. At the time when the glue-mixture becomes hard the gelpoint is reached. The time is determined with a stopwatch in seconds.

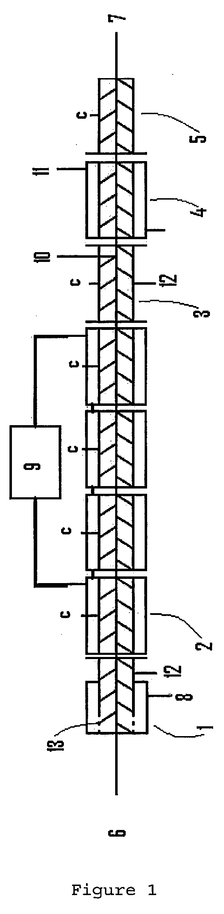

The invention is illustrated with the drawing in Figure 1 describing a continuous plug flow reactor for the manufacture of a resin solution, comprising a catalyst addition section (1), a continuous plug flow condensation reactor section (2) comprising four connected static mixers, a catalyst stopper inlet section (3), a catalyst stopper mixing and cooling section (4) and a resin solution outlet section (5). All sections (1) to (5) are provided with static mixing elements and are connected to operate as one continuous tube reactor, wherein the reaction mixture is continuously made from the beginning (6) to the end (7) of the reactor. The catalyst addition section (1) comprises an outer tube (8) providing a closed space for feeding catalyst through the perforations (13) into the inner tube. Samples of the reaction mixture can be withdrawn (12) for measurement of initial values, for example of the pH or the viscosity. The continuous plug flow condensation reactor section (2) in this example comprises four static mixers. The static mixers are double walled for cooling and are provided with temperature and/or pressure measuring means (c) and control means (9) to monitor and control the temperature and/or pressure conditions.

In this example, the four static mixers are connected and controlled in a single cooling loop to keep substantial isothermal conditions over the full length of the condensation reactor. The catalyst stopper inlet section (3) comprises a sample withdrawing means (12) for measurement, in particular of the pH and the viscosity and means (10) for addition of a catalyst stopper. In the preferred mode, a steady state operation mode is set by adjusting the amount of catalyst added (8) to get the desired viscosity of the resin solution at (12). The catalyst stopper is mixed into the reaction mixture in section (4) and cooled by cooling water (11).

The invention is further illustrated by the following examples.

**Example 1**

A continuous plug flow condensation reactor was assembled comprising, in the direction of the flow, a methylolate feeding device, an acid dosing device, a tube reactor and a caustic dosing device, all provided with heating and temperature control means. The tube reactor has a diameter of 2.7 cm and length of 60 cm and was fully equipped with Fluitec static in-line mixers (leaving 75.2% free volume). The acid dosing device and the caustic dosing device were also provided with Fluitec static in-line mixers after the acid or caustic dosing point. The reactor was heated up to 100°C at atmospheric pressure. A solution of methylolated urea (referred to as the methylolate) was provided having a formaldehyde to urea (F/U) molar ratio of 2.1 and a concentration of 53 wt% solid content in water. A continuous stream of the methylolate with pH 7 - 7.5 and a temperature of 80 - 100°C is then fed to the tube reactor and pumped through at a flow rate, such that the residence time of the methylolate in the tube reactor is 20 minutes. A sulphuric acid solution (with a concentration of 3 wt% in water) was continuously added to the methylolate through the acid dosing device at a dosing flow rate to adjust the methylolate to a pH of 4.3 $\pm$ 0.1 directly after the acid dosing. The degree of condensation at the indicated residence time is verified by sampling at the end of the tube reactor and determining the viscosity, which appeared to be 400 - 600 mPas (determined according to DIN EN ISO 3219:10/94 at room temperature (23.0 +/- 0.2°C) and at a shear rate of 200/s with a rotary viscosimeter PAAR PHYSICA MCR 51). The acid dosing flow rate controls the reaction speed and is used to control and maintain the viscosity of the reaction product within said range at the set residence time. After the reaction tube, the reaction product enters the caustic dosing device where the pH is adjusted with a continuous stream of caustic (with a concentration of 10 wt% in water) at a flow rate chosen to maintain a pH of 7.5 in the condensate reaction product. The reaction product was cooled to 90°C. A highly concentrated amino formaldehyde resin solution was obtained with a very high solids content without the need for a concentration step and without a risk of gel formation. A final resin was prepared by addition of urea to a total solid content 77 wt%.

**Example 2**

An aqueous urea formaldehyde solution was produced in the equipment and under conditions as described in Example 1 except that the acid flow rate was adjusted to obtain a methylolate with a pH of 3.5 $\pm$ 0.1 producing a urea formaldehyde solution with a viscosity of 400 - 600 mPas after a residence time of 4-5 minutes.

**Example 3**

An aqueous urea formaldehyde solution was produced in the equipment and under conditions as described in Example 1 except that the acid concentration was 5 wt% and the flow rate was adjusted to obtain a methylolate with a pH of 3.2 $\pm$ 0.1 producing a urea formaldehyde solution with a viscosity of 400 - 600 mPas after a residence time of only 1 minute. Even at this very high productivity level, no risk of gel formation was observed.

**Examples 4 to 6**

An aqueous urea formaldehyde solution was produced in the equipment and under condition as described in Example 3 except that the pressure in the tube reactor was set increased to 3, 5 and 7.5 bar resp. A urea formaldehyde solution with a viscosity of 400 - 600 mPas was continuously produced after a residence time of only 1 minute at an acid flow rate adjusted to give a methylolate with a pH of 3.3, 3.5 and 3.6 $\pm$ 0.1 respectively. The experiments show that at higher pressure, typically from 3 bar and higher, a lower amount of acid (a higher pH) is sufficient for the same reactivity, which is an advantage because there is a lower risk of gel formation.

**Claims**

1. A process for the continuous production of an aqueous amino formaldehyde resin solution, preferably melamine formaldehyde resin solution (MF) or urea formaldehyde resin solution (UF) or melamine-urea-formaldehyde resin (MUF) comprising the steps of

    a. preparing a reaction mixture of an amino compound and an aqueous formaldehyde,
    b. adding a catalyst to the reaction mixture,
    c. condensation reacting the reaction mixture in the presence of the catalyst,

    **characterised in that**,

        - in step a) the amino compound and the formaldehyde are added as a concentrated aqueous solution or as a solid to a total solid content in the reaction mixture of 40 - 85 wt% dry weight relative to the total weight of the reaction mixture, wherein

- in step c) the condensation reaction takes place in a continuous plug flow of the reaction mixture either in a static mixer comprising a tube containing in-line mixing elements, or in a tube reactor with turbulent plug flow, and wherein

- in step b) the catalyst is continuously added and finely dispersed into the reaction mixture through one or more addition points,

- in optional step d) adding an amount of amino compound after condensation,

- in optional step e) removing water to reach a higher solid content, and

- wherein the continuous plug flow in step c) is **characterized by** a Bodenstein number of at least 10.

2. The process according to claim 1, wherein the molar ratio of formaldehyde to amino compound, F/A defined as $F/((NH_2)_2)$, is between 0.5 and 4.5.

3. The process according to claims 1 to 2, wherein in step a) a reaction mixture is prepared by reacting the formaldehyde with the amino compound in the presence of an acid or base catalyst, to produce a solution of methylolated amino compound.

4. The process according to claim 3, wherein the methylolation step is done at a temperatures chosen above a sedimentation temperature where sedimentation of the reactants or reaction products occurs.

5. The process according to claims 3 or 4, wherein the pH in the methylolation step in case of UF is adjusted between 4.0 and 10.0 and in case of MF between 7.0 and 11.0.

6. The process according to claims 1 - 5, wherein the viscosity of the reaction mixture at the start of the condensation reaction step is between 1 and 50 mPas determined at room temperature and wherein the viscosity of the formaldehyde resin solution obtained at the end of the condensation reaction step is between 50 and 4000 mPas, determined at room temperature , according to DIN EN ISO 3219:10/94, and wherein the room temperature is 23.0 +/- 0.2°C.

7. The process according to claim 1 - 6, wherein the pH in the condensation reaction step in case of UF is between 3 and 7 and in case of MF is between 7 and 11 and wherein the temperature during the condensation reaction is between 60 and 180°C, and wherein the residence time in the condensation reaction is between 0.5 and 60 minutes for UF and 0.5 to 120 minutes for MF.

8. The process according to anyone of claims 1 - 7, wherein the reaction rate in the condensation reaction is set and/or controlled by controlling the pH with the amount of catalyst added.

9. The process according to claims 1 - 8, wherein in step (d) additional amino compound is added to the amino formaldehyde resin solution obtained after the condensation reaction step to reach a molar ratio of formaldehyde to amino compound $(F/NH_2)_2)$ between 0.5 and 1.5, to a total dry solid content determined according to DIN EN ISO 3251:2003 between 50 and 85 wt%.

10. The process according to claim 9, wherein the tube of the static mixer has an inner diameter at most 70 cm, and wherein the tube of the static mixer comprises at least 22 mixing elements.

**Patentansprüche**

1. Prozess für die kontinuierliche Herstellung einer wässrigen Aminoformaldehydharzlösung, vorzugsweise einer Melaminformaldehydharzlösung (MF) oder einer Harnstoffformaldehydharzlösung (UF) oder eines Melamin-Harnstoff-Formaldehydharzes (MUF), der folgende Schritte umfasst:

a. Herstellung eines Reaktionsgemisches aus einer Aminoverbindung und einem wässrigen Formaldehyd,

b. Zugeben eines Katalysators zu dem Reaktionsgemisch,

c. Umsetzen des Reaktionsgemisches im Beisein des Katalysators in einer Kondensationsreaktion, **dadurch gekennzeichnet, dass**

- in Schritt a) die Aminoverbindung und das Formaldehyd als konzentrierte wässrige Lösung oder als Feststoff bis zu einem Gesamtfeststoffgehalt in dem Reaktionsgemisch von 40 - 85 Gew.-% Trockengewicht relativ zu dem Gesamtgewicht des Reaktionsgemisches zugegeben werden, wobei

- in Schritt c) die Kondensationsreaktion in einer kontinuierlichen Pfropfenströmung des Reaktionsgemisches entweder in einem statischen Mischer, umfassend ein Rohr, das In-Line-Mischelemente enthält, oder in einem Rohrreaktor mit verwirbelter Pfropfenströmung stattfindet, und wobei

- in Schritt b) der Katalysator an mindestens einer Zugabestelle dem Reaktionsgemisch kontinuierlich zugegeben und fein verteilt wird,

- im optionalen Schritt d) nach der Kondensation eine Menge einer Aminoverbindung zugegeben wird,

- im optionalen Schritt e) Wasser entfernt wird, um einen höheren Feststoffgehalt zu erreichen,

und

- wobei die kontinuierliche Pfropfenströmung in Schritt c) durch eine Bodenstein-Nummer von mindestens 10 gekennzeichnet ist.

2. Prozess nach Anspruch 1, wobei das molare Verhältnis von Formaldehyd zu Aminoverbindung, F/A definiert als $F/((NH_2)_2)$, 0,5 bis 4,5 beträgt.

3. Prozess nach Anspruch 1 bis 2, wobei in Schritt a) ein Reaktionsgemisch hergestellt wird, indem das Formaldehyd im Beisein eines Säure- oder Basenkatalysators mit der Aminoverbindung umgesetzt wird, um eine Lösung einer methylolierten Aminoverbindung herzustellen.

4. Prozess nach Anspruch 3, wobei der Methylolierungsschritt bei einer Temperatur durchgeführt wird, die über einer Sedimentationstemperatur, bei der eine Sedimentierung der Reaktionspartner oder Reaktionsprodukte stattfindet, ausgewählt ist.

5. Prozess nach Anspruch 3 oder 4, wobei der pH-Wert bei dem Methylolierungsschritt im Falle von UF auf zwischen 4,0 und 10,0 und im Fall von MF zwischen 7,0 und 11,0 eingestellt ist.

6. Prozess nach Anspruch 1 - 5, wobei die Viskosität des Reaktionsgemisches zu Beginn des Kondensationsreaktionsschrittes bei Bestimmung bei Raumtemperatur zwischen 1 und 50 mPas liegt und wobei die Viskosität der am Ende des Kondensationsreaktionsschritts erhaltenen Formaldehydharzlösung bei Bestimmung bei Raumtemperatur gemäß DIN EN ISO 3219:10/94 zwischen 50 und 4000 mPas liegt, und wobei die Raumtemperatur 23,0 +/- 0,2 °C beträgt.

7. Prozess nach Anspruch 1 - 6, wobei der pH-Wert bei dem Kondensationsreaktionsschritt im Falle von UF zwischen 3 und 7 und im Falle von MF zwischen 7 und 11 liegt und wobei die Temperatur während der Kondensationsreaktion zwischen 60 und 180 °C liegt und wobei die Verweilzeit in der Kondensationsreaktion im Falle von UF zwischen 0,5 und 60 Minuten und im Falle von MF zwischen 0,5 und 120 Minuten liegt.

8. Prozess nach einem der Ansprüche 1 - 7, wobei die Reaktionsrate bei der Kondensationsreaktion eingestellt ist und/oder durch Kontrollieren des pH-Werts durch die zugegebene Katalysatormenge kontrolliert wird.

9. Prozess nach Anspruch 1 - 8, wobei in Schritt (d) zusätzliche Aminoverbindung bis zu einem gemäß DIN EN ISO 3251:2003 bestimmten Gesamttrockenfeststoffgehalt zwischen 50 und 85 Gew.-% zu der nach dem Kondensationsreaktionsschritt erhaltenen Aminoformaldehydharzlösung zugegeben wird, um ein molares Verhältnis von Formaldehyd zu Aminoverbindung $(F/NH_2)_2)$ zwischen 0,5 und 1,5 zu erhalten.

10. Prozess nach Anspruch 9, wobei das Rohr des statischen Mischers einen Innendurchmesser von höchstens 70 cm aufweist, und wobei das Rohr des statischen Mischers mindestens 22 Mischelemente aufweist.

## Revendications

1. Procédé de production continue d'une solution aqueuse de résine amino formaldéhyde, de préférence d'une solution de résine mélamine-formaldéhyde (MF) ou d'une solution de résine urée-formaldéhyde (UF) ou d'une solution de résine mélamine-urée-formaldéhyde (MUF) comprenant les étapes de

a. préparation d'un mélange réactionnel d'un composé amino et d'un formaldéhyde aqueux,
b. ajout d'un catalyseur au mélange réactionnel,
c. soumission du mélange réactionnel à une réaction de condensation en présence du catalyseur,

**caractérisé en ce que**,

- à l'étape a), le composé amino et le formaldéhyde sont ajoutés sous la forme d'une solution aqueuse concentrée ou sous la forme d'un solide à une teneur totale en matière solide dans le mélange réactionnel de 40 à 85 % en poids sec par rapport au poids total du mélange réactionnel, dans lequel
- à l'étape c), la réaction de condensation a lieu dans un écoulement piston continu du mélange réactionnel,

soit dans un mélangeur statique comprenant un tube contenant des éléments de mélange en ligne, soit dans un réacteur tubulaire avec un écoulement piston turbulent, et dans lequel

- à l'étape b), le catalyseur est ajouté en continu et finement dispersé dans le mélange réactionnel par un ou plusieurs points d'addition,
- dans une étape d) facultative, une quantité de composé amino est ajoutée après condensation,

- dans une étape e) facultative, l'eau est éliminée pour parvenir à une teneur supérieure en matière solide, et

- dans lequel l'écoulement piston continu à l'étape c) est **caractérisé par** un nombre de Bodenstein d'au moins 10.

2. Procédé selon la revendication 1, dans lequel le rapport molaire du formaldéhyde sur le composé amino, F/A défini comme $F/((NH_2)_2)$, est compris entre 0,5 et 4,5.

3. Procédé selon les revendications 1 à 2, dans lequel à l'étape a) un mélange réactionnel est préparé par mise en réaction du formaldéhyde avec le composé amino en présence d'un catalyseur acide ou basique, pour produire une solution de composé amino méthylolé.

4. Procédé selon la revendication 3, dans lequel l'étape de méthylolation est réalisée à une température choisie au-dessus d'une température de sédimentation à laquelle la sédimentation des réactifs ou des produits de réaction se produit.

5. Procédé selon la revendication 3 ou 4, dans lequel le pH de l'étape de méthylolation dans le cas de l'UF est ajusté entre 4,0 et 10,0, et dans le cas de la MF entre 7,0 et 11,0.

6. Procédé selon les revendications 1 à 5, dans lequel la viscosité du mélange réactionnel au début de l'étape de réaction de condensation est comprise entre 1 et 50 mPas déterminée à température ambiante et dans lequel la viscosité de la solution de résine formaldéhyde obtenue à la fin de l'étape de réaction de condensation est comprise entre 50 et 4 000 mPas, déterminée à température ambiante, conformément à DIN EN ISO 3219:10/94, et dans lequel la température ambiante est $23,0 \pm 0,2$°C.

7. Procédé selon les revendications 1 à 6, dans lequel le pH dans l'étape de réaction de condensation dans le cas de l'UF est compris entre 3 et 7 et dans le cas de la MF est compris entre 7 et 11 et dans lequel la température durant la réaction de condensation est comprise entre 60 et 180°C, et dans lequel le temps de séjour dans la réaction de condensation est compris entre 0,5 et 60 minutes pour l'UF et 0,5 et 120 minutes pour la MF.

8. Procédé selon l'une quelconque des revendications 1 à 7, dans lequel la vitesse de réaction dans la réaction de condensation est définie et/ou régulée par régulation du pH avec la quantité de catalyseur ajouté.

9. Procédé selon les revendications 1 à 8, dans lequel à l'étape (d) un composé amino supplémentaire est ajouté à la solution de résine amino formaldéhyde obtenue après l'étape de réaction de condensation pour atteindre un rapport molaire du formaldéhyde sur le composé amino $((F/NH_2)_2)$ compris entre 0,5 et 1,5, à une teneur en matière solide sèche totale déterminée conformément à DIN EN ISO 3251:2003 comprise entre 50 et 85 % en poids.

10. Procédé selon la revendication 9, dans lequel le tube du mélangeur statique a un diamètre intérieur d'au plus 70 cm, et dans lequel le tube du mélangeur statique comprend au moins 22 éléments de mélange.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2202202
- US 4458062 A
- WO 2006119982 A1
- GB 1460029 A
- WO 2008128908 A
- WO 2009065771 A1